# EUROPÄISCHE PATENTANMELDUNG

(11) **EP 2 251 553 A1**
(43) Veröffentlichungstag der Anmeldung: **17.11.2010**
(21) Anmeldenummer: 10004679.6
(22) Anmeldetag: 04.05.2010
(51) Int. Cl.: F16B 7/04, F16L 3/237, E04B 1/58, F16L 3/04, F16B 2/08

(54) **Verbindungselement für Rohre, Verfahren zum Verbinden von Rohren und Verwendung des Verbindungselementes**

(30) Priorität: 04.05.2009 DE 102009019468
(71) Anmelder: Rothe, Waldemar, 40240 Labastide d'Armagnac (FR)
(72) Erfinder: Rothe, Waldemar, 40240 Labastide d'Armagnac (FR)
(74) Vertreter: Vièl, Christof

(57) **Zusammenfassung**

Die Erfindung betrifft ein Verbindungselement für Rohre und ein Verfahren zum Verbinden von Rohren sowie eine Verwendung des Verbindungselementes bzw. des Verfahrens.
Um ein Verbindungselement für Rohre zu schaffen, das kostengünstig herstellbar, korrosionsbeständig und leicht montierbar ist, wird im Rahmen der Erfindung vorgeschlagen, daß das Verbindungselement mindestens zwei Laschen (2) aufweist, die zur Aufnahme je eines der Rohre (3) ausgebildet sind, daß die Laschen (2) Mittel (5) zum Sichern von bandförmigen Befestigungselementen aufweisen und daß die Laschen je zwei überstehende Seitenflächen (4) aufweisen, die von der jeweils benachbarten Lasche (2) nach oben bzw. unten weggebogen sind.
Der Erfindung liegt die Überlegung zugrunde, daß bandförmige Elemente auch zum Verbinden sich kreuzender Rohre vorteilhaft mit einem kreuzförmigen Verbindungselement kombiniert werden können. Insbesondere ist es möglich, mit demselben Verbindungselement auch Rohre mit unterschiedlichen Durchmessern zu verbinden, wie dies beispielsweise bei Bambusrohren der Fall ist.

## Beschreibung

Die Erfindung betrifft ein Verbindungselement für Rohre. Sie betrifft auch ein Verfahren zum Verbinden von Rohren unter Verwendung eines solchen Verbindungselementes sowie die Verwendung des Verbindungselementes bzw. des Verfahrens.

Aus der DE 100 64 974 A1 ist eine Vorrichtung zur Verbindung von Trägerrohren mit Kreisquerschnitt mit vorzugsweise unterschiedlichen Durchmessern bekannt, wobei vorzugsweise die Rohre um quer zu ihrer Längsachse verlaufende Drehachsen gegeneinander verdrehbar sind. Hierbei ist vorgesehen, daß Verbindungselemente oder Adapterplatten oder Spanneranbindungen einerseits mit einer maximal halbkreis- und zylinderförmigen Anlagefläche außen an einer Mantelteilfläche des Trägerrohres anliegen und andererseits mit einer ebenen, mit Konturelementen oder Zentrierelementen oder Befestigungselementen versehenen Anlagefläche an einer korrespondierenden, ebenen Anlagefläche mit entsprechenden Konturelementen eines Zwischenelementes anliegen oder mit Zentrierflächen oder Befestigungsflächen einer sonstigen Befestigungseinrichtung verbunden sind. Diese Vorrichtung dient zum Zusammenstellen eines modular aufgebauten Greifersystems, wie es beispielsweise im Karosseriebau verwendet wird.

Die GB 313,867 A beschreibt eine Vorrichtung zum Verbinden sich kreuzender Rohre, wobei ein kreuzförmiges Verbindungselement vorgesehen ist, in dem die Rohre positioniert werden, wobei zur Sicherung der Rohre ein U-förmiges Element um die sich kreuzenden Rohre gelegt wird und eine Platte vorgesehen ist, welche über Muttern an den beiden freien Enden des U-förmigen Elementes befestigt wird. Diese Vorrichtung ist relativ aufwendig und kostspielig in der Herstellung - insbesondere, wenn die Vorrichtung korrosionsbeständig sein soll - und erfordert relativ viel Zeit zum Sichern der sich kreuzenden Rohre.

Die US 4,440,519 A1 beschreibt ebenfalls eine Vorrichtung zum Verbinden sich kreuzender Rohre, wobei ebenfalls ein kreuzförmiges Verbindungselement vorgesehen ist, das die sich kreuzenden Rohre jeweils in etwa zur Hälfte umschließt. Die Rohre werden über Schrauben, die sich durch Bohrungen in dem Verbindungselement erstrecken, an dem Verbindungselement festgelegt. Das Verbindungselement kann beispielsweise aus entsprechend geformtem Blech bestehen. Auch bei dieser Vorrichtung ist das Festlegen der Rohre in dem Verbindungselement relativ aufwendig, da jeweils mindestens zwei Verschraubungen vorgenommen werden müssen. Zudem müssen auch hier die Schrauben für zahlreiche Anwendungen korrosionsbeständig sein.

Aus der GB 1,020,472 ist eine Vorrichtung zum Montieren von Verkehrszeichen an Rohren oder Masten bekannt, bei dem eine Halteklammer vorgesehen ist, durch die ein Metallband geführt werden kann, das um das Rohr oder den Mast gelegt wird.

Diese bekannten Verbindungselemente ermöglichen lediglich ein Kreuzen der Rohre mit einem Winkel von 90°.

Aufgabe der Erfindung ist es, ein Verbindungselement für Rohre zu schaffen, das kostengünstig herstellbar, korrosionsbeständig und leicht montierbar ist. Das Verbindungselement soll für Rohre unterschiedlicher Durchmesser geeignet sein, insbesondere für Bambusrohre, und vielfältige Verbindungsmöglichkeiten mit sich bringen.

Diese Aufgabe wird bei einem Verbindungselement gemäß dem Oberbegriff erfindungsgemäß dadurch gelöst, daß das Verbindungselement mindestens zwei Laschen aufweist, die zur Aufnahme je eines der Rohre ausgebildet sind, daß die Laschen Mittel zum Sichern von bandförmigen Befestigungselementen aufweisen und daß die Laschen je zwei überstehende Seitenflächen aufweisen, die von der jeweils benachbarten Lasche nach oben bzw. unten weggebogen sind.

Der Erfindung liegt die Überlegung zugrunde, daß bandförmige Befestigungselemente wie Kabelbinder, welche an sich zum Zusammenhalten von Kabelbündeln dienen, auch zum Verbinden sich kreuzender Rohre vorteilhaft mit einem kreuzförmigen Verbindungselement kombiniert werden können, da diese kostengünstig verfügbar, schnell montierbar und korrosionsbeständig sind. Es hat sich im Rahmen der Erfindung als erforderlich erwiesen, hierfür das Verbindungselement mit Mitteln zum Sichern der bandförmigen Elemente zu versehen, um eine form- und kraftschlüssige Verbindung zwischen dem Verbindungselement und den sich kreuzenden Rohren zu erreichen. Die Laschen können in beliebiger Weise zueinander räumlich angeordnet werden, so daß eine Vielzahl von Verbindungsmöglichkeiten möglich ist.

Im Rahmen der Erfindung ist vorgesehen, daß das Wegbiegen der Seitenflächen nach oben bzw. unten unter Ausbildung von Falzen erfolgt, so daß Laschen in der Form eines aufgebogenen U mit zwei Falzen entstehen. Die so geformten Laschen können Rohre unterschiedlichen Durchmessers aufnehmen, wie sie insbesondere bei Naturstoffen, wie Bambus, gegeben sind. Ein und dasselbe Verbindungselement kann daher für Rohre eines relativ weiten Querschnittsspektrums verwendet werden, was unter logistischen Aspekten von Vorteil ist. Aufgrund der Tatsache, daß die Seitenflächen überstehend ausgebildet sind, ergibt sich ein hervorragender Formschluß zwischen dem Verbindungselement und den Kabelbindern, der ein seitliches Herausrutschen der Kabelbinder aus dem Verbindungselement verhindert.

Erfindungsgemäß ist vorgesehen, daß die bandförmigen Befestigungselemente Kabelbinder, Schlauchschellen, Klebeband oder Metallband oder -draht sind.

Grundsätzlich ist jegliches bandförmiges Befestigungselement geeignet, das sich zum schnellen und sicheren Festlegen der Rohre an den Laschen eignet.

Eine Ausbildung der Erfindung ist **dadurch gekennzeichnet, daß** die Mittel zum Sichern der bandförmigen Befestigungselemente als jeweils zwei sich gegenüberliegende Einkerbungen an den Seitenflächen der Laschen ausgebildet sind.

Bei einer anderen Ausbildung der Erfindung ist vorgesehen, daß die Mittel zum Sichern der bandförmigen Befestigungselemente als Schlaufen oder Durchbrechungen in den Laschen ausgebildet sind, durch die die bandförmigen Befestigungselemente führbar sind.

Es ist sinnvoll, daß die Laschen zu dem aufzunehmenden Rohr hin gerichtete, punktuelle Materialverdrängungen aufweisen.

Solche zur Innenseite der Laschen hin gerichtete punktuelle Materialverdrängungen dienen dazu, ein Verschieben der Rohre zu verhindern, indem sie mit ihren Spitzen in den weicheren Werkstoff der Rohre eindringen und somit einen Formschluß zwischen den Laschen und den Rohren herstellen.

Eine Ausgestaltung der Erfindung besteht darin, daß zwei Laschen in Längsrichtung miteinander verbunden sind.

Diese Ausgestaltung ermöglicht es, zwei parallel zueinander angeordnete Rohre miteinander zu verbinden.

Bei einer anderen Ausgestaltung der Erfindung ist vorgesehen, daß zwei Laschen unter einem beliebigen Winkel zueinander angeordnet sind.

Dies ermöglicht es, eine Kreuzung zweier Rohre mit beliebigem Kreuzungswinkel zu erstellen. In diesem Zusammenhang ist es möglich, daß der Kreuzungspunkt der beiden Laschen mittig oder außermittig ist.

Auf diese Weise können beispielsweise X-Verbindungen, L-Verbindungen oder T-Verbindungen erstellt werden.

Es ist erfindungsgemäß, daß zwei oder mehr Laschen durch Verbindungsmittel miteinander verbunden sind.

Dies kann beispielsweise dadurch erfolgen, daß in den Laschen Bohrungen vorgesehen sind, durch die sich die Verbindungsmittel, bei denen es sich beispielsweise um Nieten oder Schrauben handeln kann, erstrecken.

Weiterhin ist es möglich, daß zwischen den beiden Laschen eine Verbindungsplatte angeordnet ist, die Bohrungen aufweist, welche mit den Bohrungen der Lasche fluchtend zur Aufnahme von Verbindungsmitteln dienen.

Bei dieser Variante können ebenfalls sowohl permanente Verbindungsmittel (z.B. Nieten) verwendet werden oder auch lösbare Verbindungsmittel, die ein Verändern der Position der Laschen zueinander ermöglichen. Die Verbindungsplatte stabilisiert die Verbindung zwischen zwei Laschen.

Ebenfalls ist es möglich, daß das Verbindungselement einstückig ausgebildet ist.

Es ist möglich, daß das Verbindungselement mit zwei oder mehr Laschen einstückig hergestellt ist, beispielsweise durch Stanzen eines Bleches (und eventuell Wegbiegen der Seitenflächen), was sehr geringe Herstellungskosten mit sich bringt.

Im Rahmen der Erfindung liegt auch ein Verfahren zum Verbinden von Rohren, gekennzeichnet durch folgende Verfahrensschritte:
- Aufnahme der Rohre in ein Verbindungselement, welches mindestens zwei Laschen aufweist, die zur Aufnahme je eines der Rohre ausgebildet sind und
- Festlegen der Rohre an dem Verbindungselement mittels bandförmiger Elemente, die um jedes der Rohre und durch Mittel zum Sichern des bandförmigen Elementes geführt werden.

Auch die Verwendung des erfindungsgemäßen Verbindungselementes oder des erfindungsgemäßen Verfahrens zum Verbinden von Bambusrohren liegt im Rahmen der Erfindung.

Die erfindungsgemäße Vorrichtung bzw. das erfindungsgemäße Verfahren eignet sich allgemein zum Verbinden von Rohren, ist aber insbesondere zum Verbinden von Bambusrohren vorteilhaft, in die nur schwierig Schrauben eingetrieben werden können.

Nachfolgend werden Ausführungsbeispiele der Erfindung anhand von Zeichnungen näher erläutert.

Es zeigen
- Fig. 1a, 1b und 1d: ein erfindungsgemäßes Verbindungselement mit zwei parallel angeordneten Laschen,
- Fig. 1c: eine Detailansicht zu Fig. 1d,
- Fig. 2a und Fig. 2b: ein erfindungsgemäßes T-förmiges Verbindungselement mit zwei senkrecht zueinander angeordneten Laschen,
- Fig. 3a und 3b: ein erfindungsgemäßes X-förmiges Verbindungselement mit zwei senkrecht zueinander angeordneten Laschen,
- Fig. 3c: das Verbindungselement gemäß Fig. 3a mit daran befestigten Rohren,
- Fig. 3d und Fig. 3e: weitere Formen von Verbindungsplatten,
- Fig. 4a und Fig. 4b: ein einstückiges X-förmiges erfindungsgemäßes Verbindungselement,
- Fig. 5: ein einstückiges T-förmiges erfindungsgemäßes Verbindungselement,
- Fig. 6a und Fig. 6b: ein aus drei miteinander verbundenen Laschen bestehendes erfindungsgemäßes Verbindungselement,
- Fig. 7a und Fig. 7b: eine andere Ausbildung der Mittel zum Sichern des bandförmigen Befestigungselementes,
- Fig. 8a und Fig. 8b: eine andere Möglichkeit der Verbindung zweier Laschen.

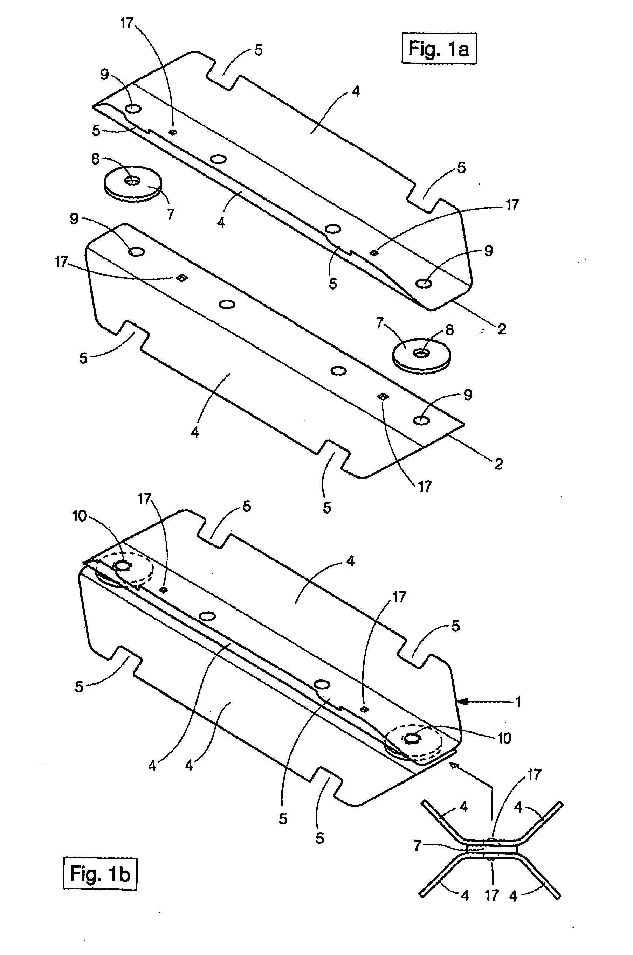

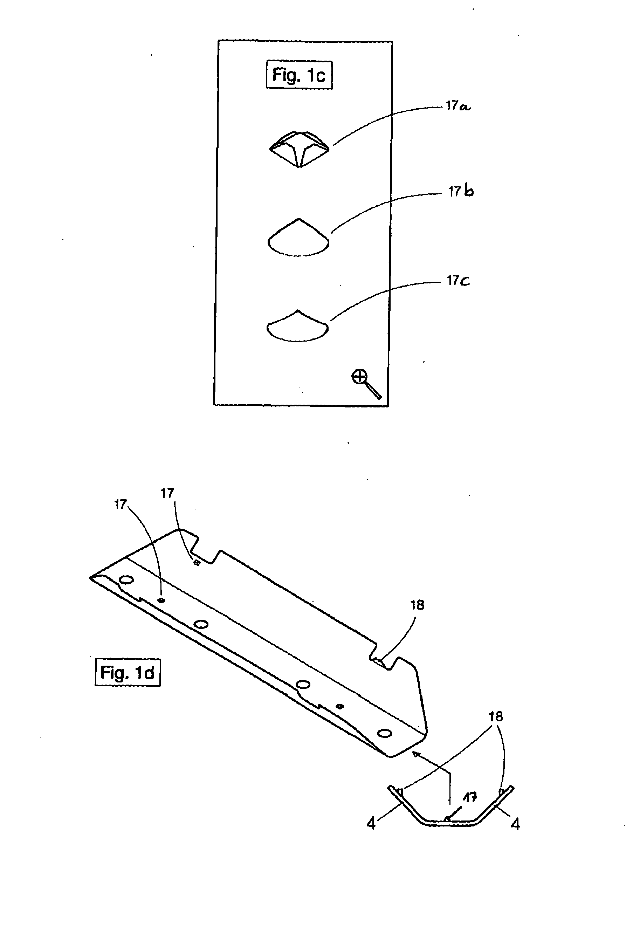

Aus den Fig. 1a bis 6 ist ersichtlich, daß das erfindungsgemäße Verbindungselement 1 mindestens zwei Laschen 2 aufweist, die zur Aufnahme je eines der zu verbindenden Rohre 3 ausgebildet sind, so daß die Rohre 3 von dem Verbindungselement 1 zumindest in einem Teilbereich (in der Regel etwa zur Hälfte) von dem Verbindungselement 1 umschlossen werden. In den gezeigten Ausführungsbeispielen wird dies dadurch erreicht, daß die Laschen 2 je zwei überstehende Seitenflächen 4 aufweisen, die von der jeweils benachbarten Lasche 2 nach oben bzw. unten weggebogen sind. Es entstehen hierdurch Laschen 2 in der Form eines aufgebogenen U mit zwei Falzen, die Rohre 3 verschiedenen Querschnitts aufnehmen können. Das Verbindungselement 1 kann daher für Rohre 3 eines relativ weiten Querschnittsspektrums verwendet werden, was unter logistischen Aspekten von Vorteil ist.

Die Laschen 2 können beispielsweise aus Stahl, Edelstahl, Kunststoff oder Verbundwerkstoffen bestehen.

Die Laschen 2 weisen an ihren Seiten, in den gezeigten Ausführungsbeispielen an ihren Seitenflächen 4, jeweils zwei sich gegenüberliegende Einkerbungen 5 zum Sichern eines bandförmigen Befestigungselementes 6, insbesondere eines Kabelbinders 6 auf. Aufgrund der Tatsache, daß die Seitenflächen 4 überstehend ausgebildet sind, ergibt sich ein hervorragender Formschluß zwischen dem Verbindungselement 1 und dem bandförmigen Befestigungselement 6, der ein seitliches Herausrutschen des bandförmigen Befestigungselementes 6 aus dem Verbindungselement 1 verhindert.

Wie in den Fig. 1a und 1b dargestellt, können zwei Laschen 2 in Längsrichtung miteinander verbunden werden, was das Verbinden zweier paralleler Rohre ermöglicht. Fig. 1a und 1b zeigen, daß hier zwischen den Laschen 2 zwei Verbindungsplatten 7 in Form von Scheiben angeordnet sind, wobei sich durch die Bohrungen 8 der Verbindungsplatten 7 und Bohrungen 9 in den Laschen Verbindungsmittel 10 zum Verbinden der beiden Laschen 2 erstrecken.

Weiterhin weisen die Laschen 2 vorzugsweise zu dem aufzunehmenden Rohr (also zur Innenseite der Laschen 4) hin gerichtete, punktuelle Materialverdrängungen 17 auf, die Spitzen bilden, welche in den weicheren Werkstoff des Rohres eindringen können und so einen Formschluß zwischen der Lasche 2 und dem Rohr erzeugen. Wie Fig. 1d zeigt, können diese zur Innenseite der Lasche 2 hin gerichteten punktuellen Materialverdrängungen 17 unterschiedliche Formen aufweisen, beispielsweise eine quadratische Grundform mit vier Vorsprüngen 17a, eine gleichmäßig ansteigende konische Form 17b oder eine ungleichmäßig ansteigende konische Form 17c aufweisen. Sie können sowohl an der Unterseite der Lasche als auch an den beiden Seitenflächen 4 angeordnet sein. Eine Anordnung der Materialverdrängungen 17 an letzteren ist besonders sinnvoll, da die Seitenflächen 4 beim Festziehen des bandförmigen Befestigungsmittels 6 aufgrund ihrer Elastizität gegen das Rohr gezogen werden.

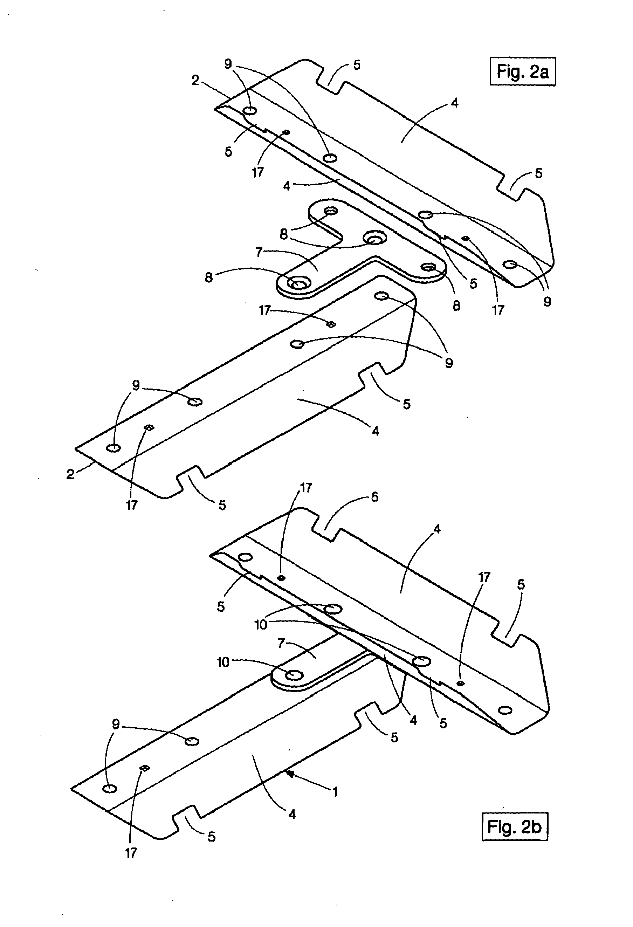

Fig. 2a und 2b zeigen die Verbindung zweier Laschen 2, wobei die Verbindung in der Mitte der einen Lasche 2 und am Ende der anderen Lasche 2 erfolgt, so daß ein T-förmiges Verbindungselement 1 entsteht. Hierbei wird eine T-förmige Verbindungsplatte 7 verwendet. Die Verbindung der beiden Laschen 2 erfolgt wie in den Fig. 1a und 1b.

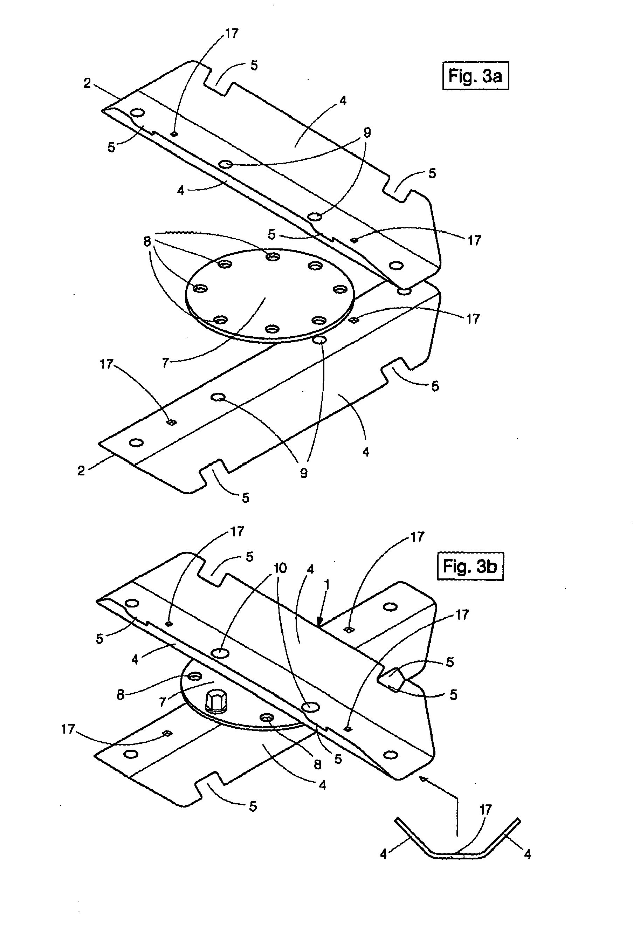

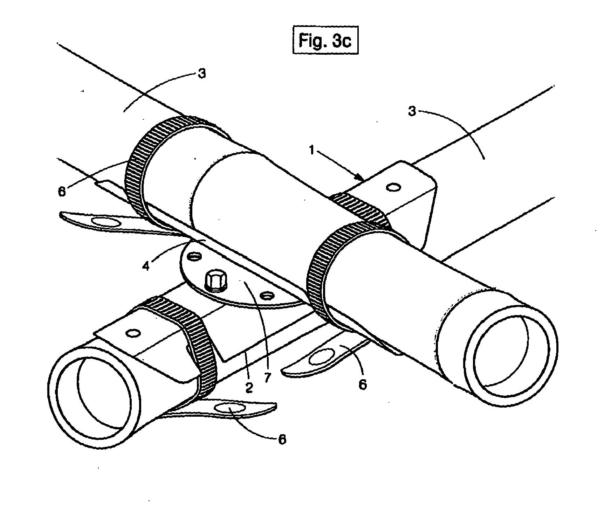

Fig. 3a und Fig. 3b zeigen die Verbindung zweier Laschen 2 mittels einer Verbindungsplatte 7 in Form einer Rundplatte mit radial angeordneten Bohrungen 8, was ein Verbinden der Laschen 2 unter verschiedenen Winkeln - entsprechend der Anzahl bzw. Verteilung der radialen Bohrungen 8 der Verbindungsplatte 7 - ermöglicht. Auch hier erfolgt die Verbindung der Laschen 2 wie in den Fig. 1a und 1b. Fig. 3c zeigt das auf diese Weise hergestellte Verbindungselement 1 nach dem Befestigen der Rohre 3 mittels Kabelbindern 6, die durch die Einkerbungen 5 vor einem Herausgleiten aus dem Verbindungselement 1 gesichert sind.

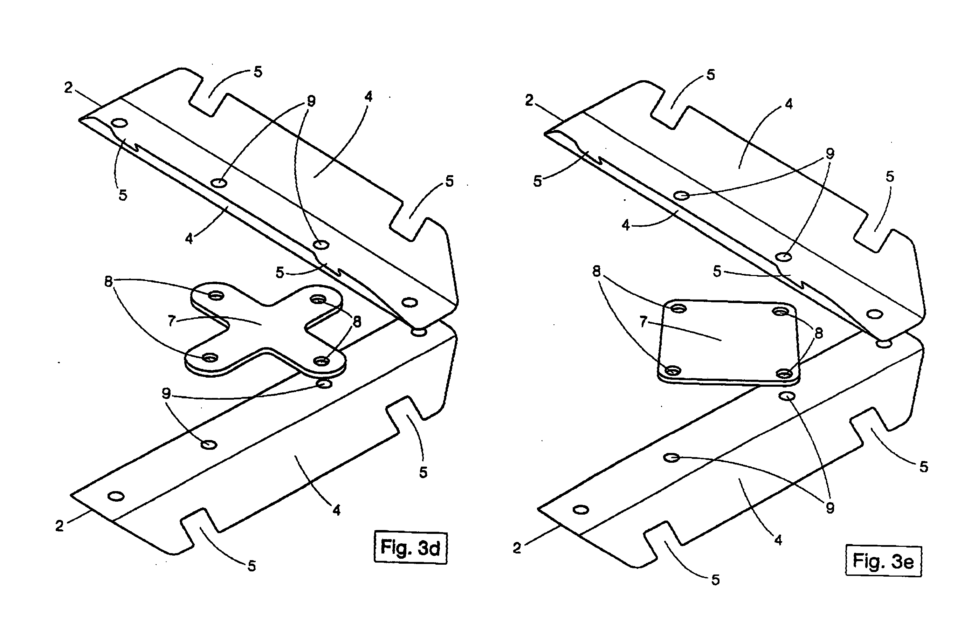

Die Fig. 3d und 3e zeigen, daß auch eine Verbindung zweier Laschen 2 jeweils an ihren Enden möglich ist, wobei sowohl quadratische als auch X-förmige Verbindungsplatten 7 verwendet werden können.

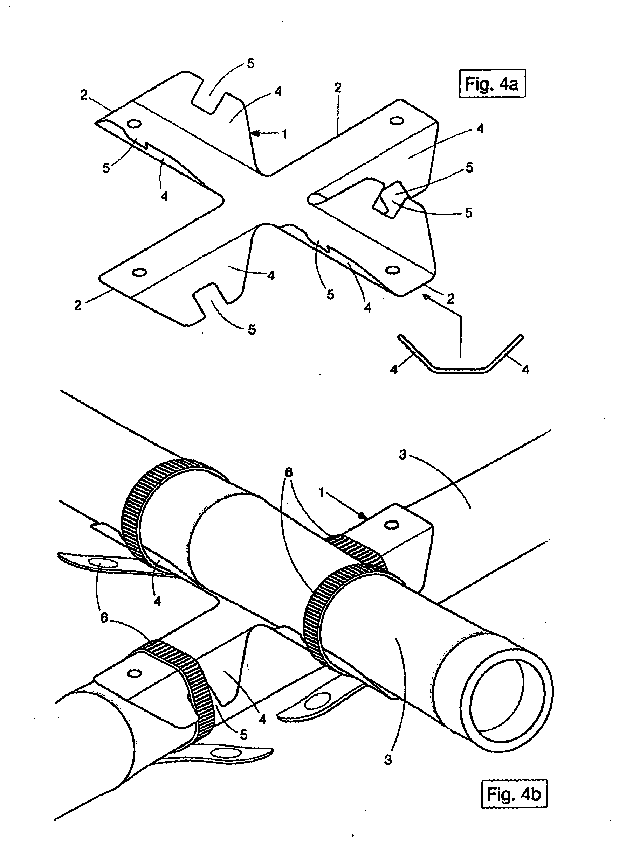

Aus den Fig. 4a und 4b ist ersichtlich, wie ein einstückiges Verbindungselement 1 zum kreuzförmigen Verbinden zweier Rohre 3 beispielsweise durch Stanzen eines Rohlings (hier mit vier Laschen 2, die jeweils Seitenflächen 4 mit sich gegenüberliegenden Einkerbungen 5 aufweisen) und Wegbiegen der Seitenflächen 4 nach oben bzw. nach unten (von einer Lasche 2 zur benachbarten jeweils im Wechsel) kostengünstig erstellt werden kann. Das Verbinden der Rohre 3 erfolgt wie in Fig. 3c.

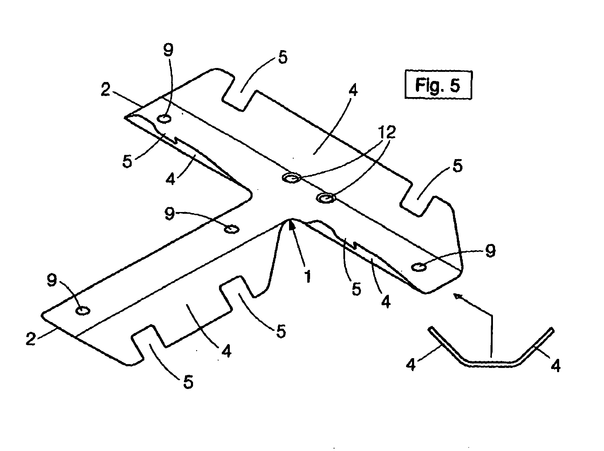

Auch ein T-förmiges Verbindungselement 1 kann einstückig ausgebildet werden, wie aus Fig. 5 ersichtlich ist.

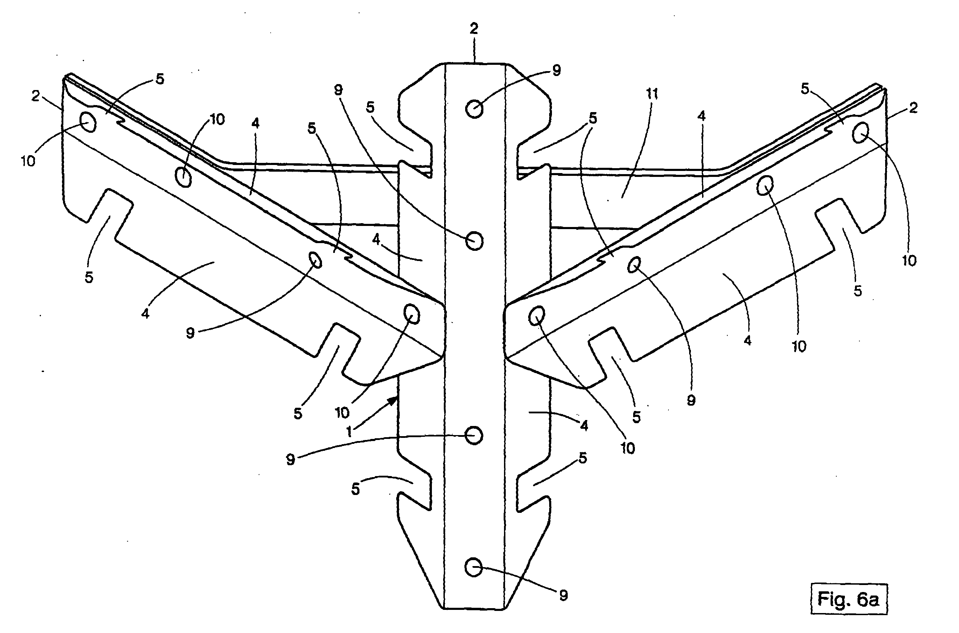

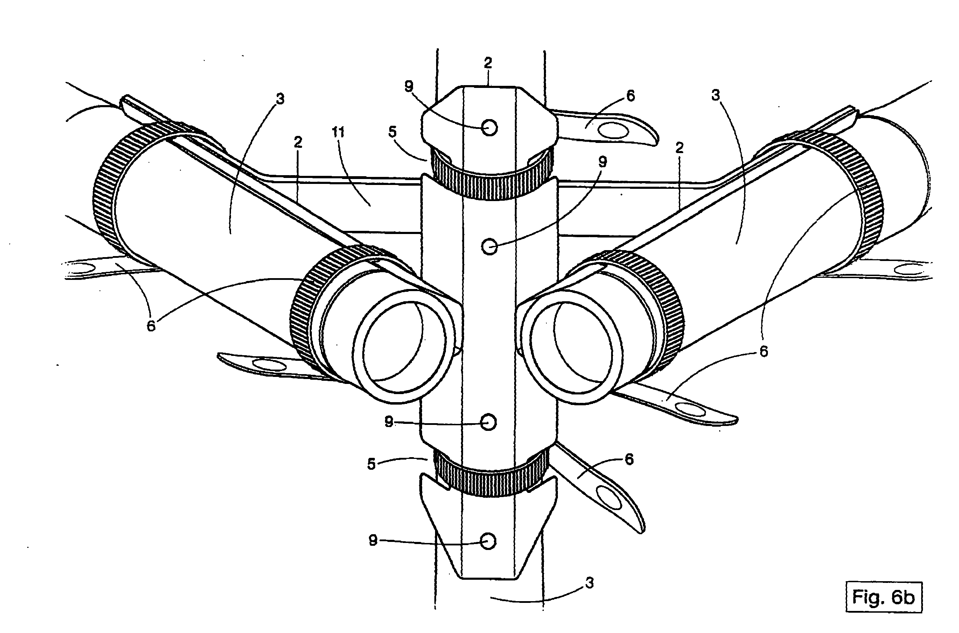

Die Fig. 6a und 6b zeigen drei mit Hilfe von Verbindungsmitteln 10 und eines Metallbügels 11 miteinander verbundene Laschen 2 vor und nach Befestigung dreier Rohre 3 an diesem Verbindungselement 1.

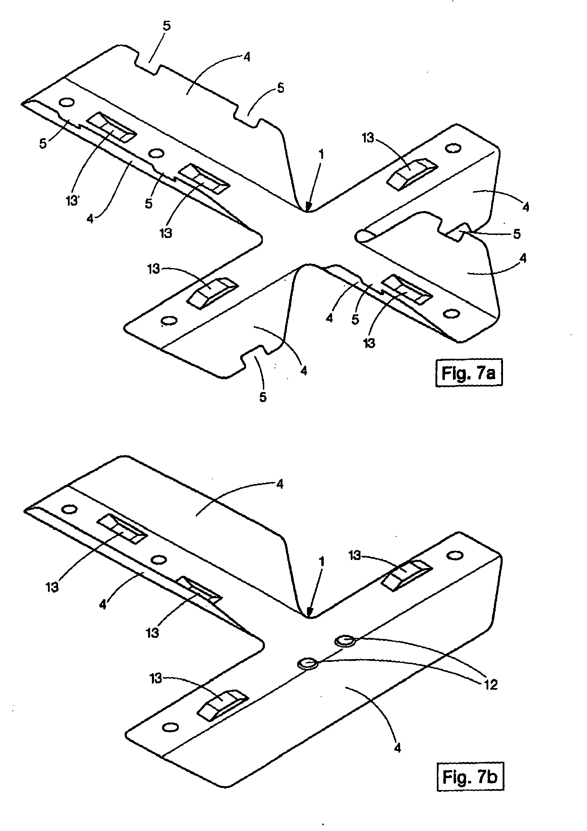

In den Fig. 7a und 7b ist eine andere Ausbildung eines einstückigen T-förmigen Verbindungselementes 1 dargestellt, wobei hier die Mittel 5 zum Sichern des bandförmigen Elementes 6 als Schlaufen 13 ausgebildet sind, durch die das bandförmige Element 6 geführt ist. Die Schlaufen 13 können beim Stanzen des einstückigen Verbindungselementes 1 kostengünstig hergestellt werden. Weiterhin sind in Fig. 7b zwei zusätzliche Bohrungen 12 dargestellt, durch ein weiteres bandförmiges Befestigungselement 6 geführt und um das dort angeordnete freie Ende des einen Rohres 3 gelegt werden kann, um eine bessere Sicherung im Bereich des Aufeinandertreffens der beiden zu verbindenden Rohre 3 zu erreichen.

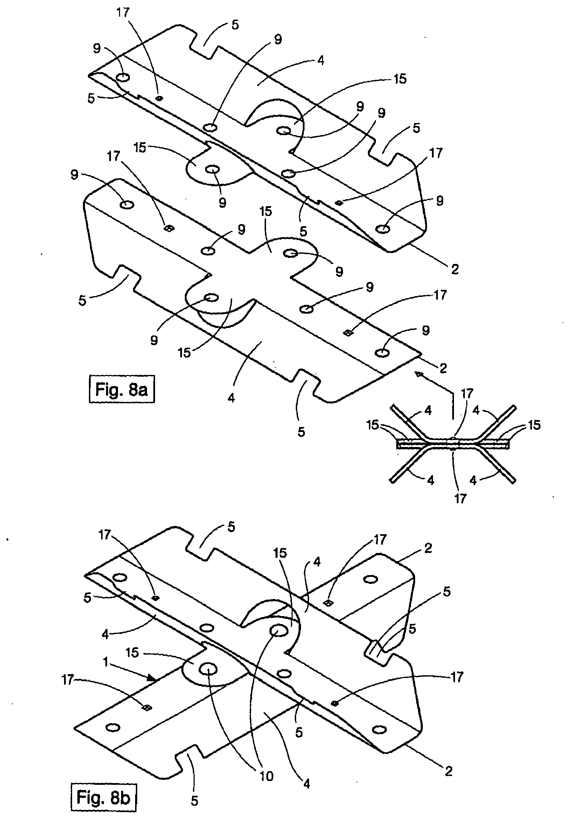

Die Fig. 8a und 8b zeigen schließlich eine andere Möglichkeit der Verbindung zweier Laschen 2. Bei dieser Variante werden beim Herstellen der Laschen 2 Verbindungslaschen 15 aus den Seitenflächen 4 ausgestanzt, welche nicht nach oben bzw. unten weggebogen werden und somit auf der Basislinie der Laschen 2 angeordnet sind. Diese Verbindungslaschen 15 weisen Bohrungen 9 auf, über die jeweils zwei übereinander liegende Laschen 2 miteinander verbunden werden können, und zwar sowohl in Längsrichtung übereinander liegend (Fig. 8a als auch sich kreuzend (Fig. 8b).

## Patentansprüche

1. Verbindungselement (1) für Rohre (3), **dadurch gekennzeichnet, daß** das Verbindungselement (1) mindestens zwei Laschen (2) aufweist, die zur Aufnahme je eines der Rohre (3) ausgebildet sind, daß die Laschen (2) Mittel (5) zum Sichern von bandförmigen Befestigungselementen (6) aufweisen und daß die Laschen (2) je zwei überstehende Seitenflächen (4) aufweisen, die von der jeweils benachbarten Lasche (2) nach oben bzw. unten weggebogen sind.

2. Verbindungselement gemäß Anspruch 1, **dadurch gekennzeichnet, daß** die bandförmigen Befestigungselemente (6) Kabelbinder, Schlauchschellen, Klebeband oder Metallband oder -draht sind.

3. Verbindungselement gemäß Anspruch 1, **dadurch gekennzeichnet, daß** die Mittel (5) zum Sichern der bandförmigen Befestigungselemente (6) als jeweils zwei sich gegenüberliegende Einkerbungen (5) an den Seitenflächen (4) der Laschen (2) ausgebildet sind.

4. Verbindungselement gemäß Anspruch 1, **dadurch gekennzeichnet, daß** die Mittel (5) zum Sichern der bandförmigen Befestigungselemente (6) als Schlaufen (13) oder Durchbrechungen (14) in den Laschen (2) ausgebildet sind, durch die die bandförmigen Befestigungselemente (6) führbar sind.

5. Verbindungselement gemäß Anspruch 3, **dadurch gekennzeichnet, daß** die Laschen (2) zu dem aufzunehmenden Rohr hin gerichtete, punktuelle Materialverdrängungen (17, 17a, 17b, 17c) aufweisen.

6. Verbindungselement gemäß einem der Ansprüche 1 bis 5, **dadurch gekennzeichnet, daß** zwei Laschen (2) in Längsrichtung miteinander verbunden sind.

7. Verbindungselement gemäß einem der Ansprüche 1 bis 6, **dadurch gekennzeichnet, daß** zwei Laschen (2) unter einem beliebigen Winkel zueinander angeordnet sind.

8. Verbindungselement gemäß einem der Ansprüche 1 bis 7, **dadurch gekennzeichnet, daß** zwei oder mehr Laschen (2) durch Verbindungsmittel (10) miteinander verbunden sind.

9. Verbindungselement gemäß Anspruch 8, **dadurch gekennzeichnet, daß** in den Laschen (2) Bohrungen (9) vorgesehen sind, durch die sich die Verbindungsmittel (10) erstrecken.

10. Verbindungselement gemäß Anspruch 9, **dadurch gekennzeichnet, daß** zwischen den beiden Laschen (2) eine Verbindungsplatte (7) angeordnet ist, die Bohrungen (8) aufweist, welche mit den Bohrungen (9) der Lasche (2) fluchtend zur Aufnahme von Verbindungsmitteln (10) dienen.

11. Verbindungselement gemäß Anspruch 1, **dadurch gekennzeichnet, daß** das Verbindungselement (1) einstückig ausgebildet ist.

12. Verfahren zum Verbinden von Rohren (3), **gekennzeichnet durch** folgende Verfahrensschritte:
• Aufnahme der Rohre (3) in ein Verbindungselement (1), welches mindestens zwei Laschen (2) aufweist, die zur Aufnahme je eines der Rohre (3) ausgebildet sind und
• Festlegen der Rohre (3) an dem Verbindungselement (1) mittels bandförmiger Elemente (6), die um jedes der Rohre (3) und **durch** Mittel (5) zum Sichern des bandförmigen Elementes (6) geführt werden.

13. Verwendung des Verbindungselementes gemäß der Ansprüche 1 bis 11 oder des Verfahrens zum Verbinden von Rohren (3) gemäß Anspruch 12 zum Verbinden von Bambusrohren.
